# EUROPÄISCHE PATENTSCHRIFT

(11) **EP 1 234 122 B1**
(45) Veröffentlichungstag und Bekanntmachung des Hinweises auf die Patenterteilung: **20.08.2008**
(21) Anmeldenummer: 01964932.6
(22) Anmeldetag: 24.08.2001
(51) Int. Cl.: F16B 17/00, H02K 7/00

(54) **ANKER FÜR EINE ELEKTRISCHE MASCHINE**
ARMATURE FOR AN ELECTRIC MACHINE
INDUIT POUR MACHINE ELECTRIQUE

(30) Priorität: 13.09.2000 DE 10045222
(43) Veröffentlichungstag der Anmeldung: 28.08.2002
(73) Patentinhaber: ROBERT BOSCH GMBH, 70442 Stuttgart (DE)
(72) Erfinder: DROLL, Bruno, 77815 Buehl-Altschweier (DE); KARL, Martin, 77887 Sasbachwalden (DE); GOEDECKE, Martin, 77815 Buehl (DE)
(86) Internationale Anmeldenummer: PCT/DE2001/003245
(87) Internationale Veröffentlichungsnummer: WO 2002/023695

(56) Entgegenhaltungen:
- FR-A- 2 144 403
- US-A- 4 339 873

## Beschreibung

### Stand der Technik

Die Erfindung geht von einem Anker für eine elektrische Maschine nach der Gattung des Anspruchs 1 aus.

Aus der US-PS 4,886,392 ist schon ein Rotor mit einer Welle bekannt, die eine Rändelung und glatte Bereiche auf einer Oberfläche der Welle hat, wobei die Welle im Bereich der Rändelung und der glatten Bereiche ungefähr den gleichen Außendurchmesser aufweist. Der Rotor, der auf die Welle aufgeschoben wird, hat jedoch keine Verjüngung im Innendurchmesser, die im Bereich der Rändelung angeordnet ist.

Aus der US-PS 5,625,511 ist schon ein Stator mit einer Welle bekannt, in deren Mitte eine Rändelung aufgebracht ist. Jenseits der Rändelung auf der Welle gibt es einen glatten Bereich, der den gleichen Aussendurchmesser wie die Rändelung hat und zur Führung des Stators dienen kann, der auf der Welle befestigt wird. Der Stator hat jedoch keine Verjüngung im Innendurchmesser, die im Bereich der Rändelung angeordnet ist.

Aus dem Buch "Feinmechanische Bauelemente" von Prof. Dr.-Ing. S. Hildebrandt, Carl Hanser Verlag München, auf Seite 221, ist bekannt, eine Welle mit einer Rändelung zu verwenden, wobei die Rändelung einen grösseren Aussendurchmesser als einen Innendurchmesser eines Bauteils hat, das im Bereich der Rändelung auf die Welle aufgeschoben und dort befestigt ist. Das Bauteil ist mechanisch weicher als die Welle und presst sich in die Rändelung der Welle ein, so dass sich eine formschlüssige Unterstützung ergibt. Der Aussendurchmesser der Welle ausserhalb der Rändelung ist kleiner als der Innendurchmesser des Bauteils.

Die US-PS 4,339,873 zeigt eine Rotorwelle, die eine Vertiefung hat, in der eine Rändelung angeordnet ist. Das Bauteil, das auf die Rotorwelle aufgeschoben wird, ist mit seiner Verjüngung im eingebauten Zustand im Bereich der Rändelung angeordnet. Die Verjüngung wird jedoch durch plastische Verformung des Bauteils nach Aufschieben des Bauteils auf die Welle erzeugt.

### Vorteile der Erfindung

Der erfindungsgemäße Anker mit den kennzeichnenden Merkmalen des Anspruchs 1 hat dem gegenüber den Vorteil, dass auf einfache Art und Weise ein Bauteil auf einer Welle befestigt werden kann und sicher gehalten wird. Weiterhin kommt es durch die Verjüngung im Innendurchmesser des Bauteils dazu, dass sich das Material des Bauteils im Bereich der Verjüngung plastisch verformt und in die Rändelung fliesst, und so einen Formschluß bildet.

Auf vorteilhafte Weise kann für das Bauteil ein kunststoffgespritzter Magnet verwendet werden, da dieser mechanisch weicher als die Welle ist.

Weiterhin vorteilhaft ist es, dass die Verjüngung mittig im Bauteil angeordnet ist, weil sich dadurch die Spannungen um die Rändelung herum gleichmäßig abbauen können.

### Zeichnung

Ein Ausführungsbeispiel der Erfindung ist in der Zeichnung vereinfacht dargestellt und in der nachfolgenden Beschreibung näher erläutert.

Es zeigen
Figur 1 ein Bauteil, das für ein erfindungsgemässen Anker verwendet wird,
Figur 2 a, b und c eine Welle, wie sie für den erfindungsgemässen Anker verwendet wird und wie sie hergestellt wird,
Figur 3 einen erfindungsgemässen Anker im zusammengebauten Zustand.

### Beschreibung des Ausführungsbeispiels

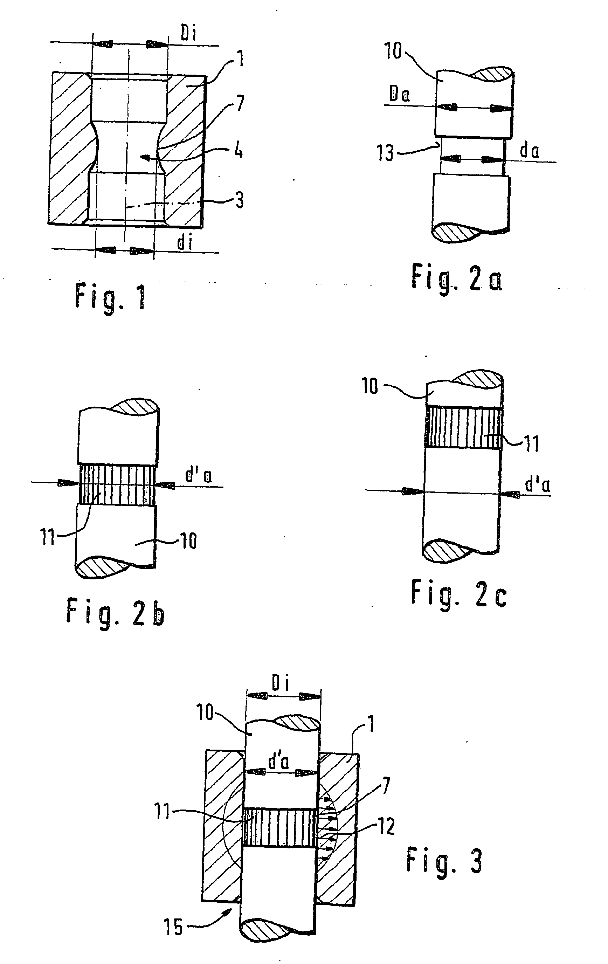

Figur 1 zeigt ein Bauteil 1, das beispielsweise ein mechanisches Kugellager oder ein kunststoffgespritzter Magnet ist und im Vergleich zur Welle 10 (Fig.2 ) aus einem relativ weicheren Material besteht.
Das Bauteil 1 hat eine Mittelachse 3, die beispielsweise auch die Symmetrieachse sein kann und eine Ausnehmung 4, die sich im Innern des Bauteils 1 in axialer Richtung erstreckt. In der Ausnehmung 4 des Bauteils 1 ist in axialer Richtung bspw. mittig eine Verjüngung 7 angeordnet, d.h. im äusseren Bereich der Ausnehmung 4 hat das Bauteil 1 einen Innendurchmesser Di und im Bereich der Verjüngung 7 einen kleineren Innenduchmesser di.

Figur 2c zeigt die Welle 10 des erfindungsgemässen Ankers mit einem Aussendurchmesser d'a.
Die Welle 10 wird bspw. wie folgt hergestellt. Bei einer Welle 10 mit einem Aussendurchmesser Da wird im Bereich 13 einer späteren Rändelung 11 ein Einstich vorgenommen, der dann einen kleineren Aussendurchmesser da aufweist (Figur 2a)). In diesem Bereich wird die Rändelung 11 eingebracht, wie sie in Figur 2b gezeigt ist. Die Rändelung 11 hat einen äusseren Außendurchmesser d'a. Die Art der Rändelung ist beliebig. Sie kann aus Längsrillen, Querrillen oder gekreuzten Rillen bestehten.
Der Aussendurchmesser Da auf der Welle 10 ausserhalb der Rändelung 11 wird, wenn nötig, so abgeschliffen oder abgedreht, dass er dem Aussendurchmesser der Rändelung 11 entspricht, d. h. die Welle 10 hat einen konstanten Aussendurchmesser d'a. Gegebenfalls wird eine Rändelung 11, die einen grösseren Aussendurchmesser als Da im Durchmesser hat, auf Da reduziert.
Die Welle 10 kann auch abschnittsweise gehärtet sein.

Figur 3 zeigt, wie das Bauteil 1 auf der Welle 10 befestigt ist. Das Bauteil 1 hat eine axiale Länge, die länger als die Rändelung 11 ist.
Der Innendurchmesser Di des Bauteils 1 entspricht bspw. ungefähr dem Aussendurchmesser d'a der Welle 10 gemäß Figur 2c, d.h. beim anfänglichen Aufschieben des Bauteils 1 auf die Welle 10 wird das Bauteil 1 durch die Welle 10 geführt. Es kann auch eine leichte Presspassung vorliegen. Wird das Bauteil 1 weiter auf die Welle 10 aufgeschoben, so kommt es zum Auftreten oder einer Erhöhung einer Spannung im Bauteil 1, weil die Verjüngung 7 auf die Welle 10 ausserhalb der Rändelung 11 aufgeschoben wird. Wenn das Bauteil 1 weiter auf die Welle 10 geschoben wird, bis die Verjüngung 7 im Bereich der Rändelung 11 angeordnet ist, verformt sich das Bauteil 1 aufgrund der Presspassung im Bereich der Verjüngung 7, weil das Material des Bauteils 1 in die Vertiefungen der Rändelung 11 eindringt.

Wenn im Bereich um die Rändelung 11 das Bauteil 1 durch die Welle 10 geführt ist, treten an den Kanten der Rändelung 11 keine Kerbspannungen auf, sondern es zeigt sich der in Figur 3 gezeigte Spannungsverlauf der einen gleichmässigen Abfall der Spannungen im Bauteil 1 in beiden axialen Richtungen um die Rändelung 11 herum zeigt. Im Laufe der Zeit kann es sogar zu einem spannungslosen Zustand im Bereich der ehemaligen Verjüngung 7 kommen und das Bauteil 1 ist nur noch durch Formschluß auf der Welle 10 befestigt.

Ein solcher Anker 15 kann für einen elektrischen Motor oder einen elektrischen Generator verwendet werden und weist noch in nicht dargestellter Weise einen Trägerkörper für wenigstens eine Spule oder Permanentmagneten und bspw. einen Kommutator auf.

## Patentansprüche

1. Anker für eine elektrische Maschine,
bestehend
aus einer zumindest teilweise zumindest eine aus einer Welle (10) die zumindest teilweise zumindest eine Rändelung (11) und zumindest teilweise an den nicht
gerändelten Stellen den gleichen Aussendurchmesser (d'a) wie Rände die Rändelung (11) hat,
aus zumindest einem Bauteil (1), das auf der Welle (10) durch die Rändelung (11) mittels Presspassung befestigt ist, **dadurch gekennzeichnet,**
**dass** das Bauteil (1) eine Mittelachse (3) hat,
das Bauteil (1) im Innern eine sich in axialer Richtung erstreckende Ausnehmung (4) hat, und
**dass** das Bauteil (1) zumindest teilweise eine Verjüngung (7) mit einem Innendurchmesser (di) hat und die Verjüngung (7) in der Ausnehmung (4) und im Bereich der Rändelung (11) angeordnet ist.

2. Anker nach Anspruch 1,
**dadurch gekennzeichnet, dass**
das Bauteil (1) ein kunststoffgespritzter Magnet ist.

3. Anker nach Anspruch 1,
**dadurch gekennzeichnet, dass**
das Bauteil (1) ein Lager ist.

4. Anker nach Anspruch 1,
**dadurch gekennzeichnet, dass**
die Verjüngung (7) in axialer Richtung mittig im Bauteil (1) angeordnet ist.

5. Anker nach Anspruch 1,
**dadurch gekennzeichnet, dass**
die elektrische Maschine ein elektrischer Motor ist.

6. Anker nach Anspruch 1,
**dadurch gekennzeichnet, dass**
die elektrische Maschine ein elektrischer Generator ist.

## Claims

1. Armature for an electrical machine, comprising
a shaft (10) which has at least one knurled area (11) at least in places and has the same external diameter (d'a) as the knurled area (11) at least at some of the points which are not knurled,
at least one component (1) which is mounted on the shaft (10) by means of an interference fit with the knurled area (11),
**characterized**
**in that** the component (1) has a centre axis (3), the component (1) has, in the interior, a recess (4) which extends in the axial direction, and
**in that** the component (1) has a tapered area (7), at least in places, with an internal diameter (di), and the tapered area (7) is arranged in the recess (4) and in the region of the knurled area (11).

2. Armature according to Claim 1,
**characterized in that**
the component (1) is a plastic injected magnet.

3. Armature according to Claim 1,
**characterized in that**
the component (1) is a bearing.

4. Armature according to Claim 1,
**characterized in that**
the tapered area (7) is arranged centrally in the component (1) in the axial direction.

5. Armature according to Claim 1,
**characterized in that**
the electrical machine is an electric motor.

6. Armature according to Claim 1,
**characterized in that**
the electrical machine is an electrical generator.

## Revendications

1. Induit de machine électrique composé :
- d'au moins un arbre (10) qui comporte au moins en partie au moins un moletage (11) et au moins en partie dans des endroits non moletés, le même diamètre extérieur (d'a) que le moletage (11),
- d'au moins un composant (1) fixé sur l'arbre (10) par le moletage par un ajustage pressé,
**caractérisé en ce que**
- le composant (1) a un axe géométrique (3),
- le composant (1) a une cavité (4) à l'intérieur qui s'étend dans la direction axiale, et
- le composant (1) comporte au moins en partie un rétrécissement (7) de diamètre intérieur (di) et le rétrécissement (7) étant prévu dans la cavité (4) et dans la zone du moletage (11).

2. Induit selon la revendication 1,
**caractérisé en ce que**
le composant (1) est un aimant injecté dans de la matière plastique.

3. Induit selon la revendication 1,
**caractérisé en ce que**
le composant (1) est un palier.

4. Induit selon la revendication 1,
**caractérisé en ce que**
le rétrécissement (7) se trouve dans la direction axiale au milieu du composant (1).

5. Induit selon la revendication 1,
**caractérisé en ce que**
la machine électrique est un moteur électrique.

6. Induit selon la revendication 1,
**caractérisé en ce que**
la machine électrique est un générateur électrique.
